# EUROPÄISCHE PATENTSCHRIFT

(11) **EP 3 198 578 B1**
(45) Veröffentlichungstag und Bekanntmachung des Hinweises auf die Patenterteilung: **29.01.2020**
(21) Anmeldenummer: 15770854.6
(22) Anmeldetag: 23.09.2015
(51) Int. Cl.: G08G 1/0967, G01C 21/00, G08G 1/14

(54) **SENSORKALIBRIERUNG IN EINER PARKANLAGE**
SENSOR CALIBRATION IN A CAR PARK
ÉTALONNAGE DE CAPTEUR DANS UN SYSTÈME DE STATIONNEMENT

(30) Priorität: 25.09.2014 DE 102014219382
(43) Veröffentlichungstag der Anmeldung: 02.08.2017
(73) Patentinhaber: Continental Teves AG & Co. OHG, 60488 Frankfurt am Main (DE)
(72) Erfinder: SEURER, Frank, 61118 Bad Vilbel (DE); SWOBODA, Adam, 64521 Groß-Gerau (DE)
(86) Internationale Anmeldenummer: PCT/EP2015/071889
(87) Internationale Veröffentlichungsnummer: WO 2016/046271

(56) Entgegenhaltungen:
- DE-A1-102012 016 867
- DE-A1-102012 224 107
- US-A1- 2014 064 126

## Beschreibung

Die Erfindung betrifft ein Verfahren zum Kalibrieren eines Fahrzeuges, eine Steuervorrichtung zur Durchführung des Verfahrens, das Fahrzeug mit der Steuervorrichtung sowie ein System zum Ausführen des Verfahrens.

Die DE 10 2012 224 107 A1 beschreibt ein Verfahren, wobei mittels eines Inertialsensors erfasste Fahrdynamikdaten des Fahrzeugs herangezogen werden, um den Informationsgehalt von GNSS-Lagedaten zu steigern und die Position und die Geschwindigkeit des Fahrzeuges auf der Fahrbahn zu präzisieren.

Aus der DE 10 2012 016 867 A1 ist ein Parkassistenzsystem zum automatischen Parken eines Fahrzeugs bekannt. Es umfasst eine mit einem Fahrzeug drahtlos verbindbare stationäre Verifikations- und Überwachungseinrichtung, die zum Überwachen eines automatischen Parkvorgangs eines Fahrzeuges ausgebildet ist.

Es ist Aufgabe der Erfindung, die Nutzung des Parkassistenzsystems zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Kalibrieren eines internen Sensors in einem Fahrzeug mit einem externen Sensor, der eingerichtet ist, von einer Lage des Fahrzeugs abhängige externe Lagedaten zu erfassen, umfassend:
- Erfassen der externen Lagedaten mit dem externen Sensor,
- Senden der externen Lagedaten an das Fahrzeug, und
- Filtern von mit dem internen Sensor erfassten und von der Lage des Fahrzeugs abhängigen internen Lagedaten basierend auf den externen Lagedaten.

Dem angegebenen Verfahren liegt die Überlegung zugrunde, dass mit stationäre Verifikations- und Überwachungseinrichtungen, wie sie aus dem eingangs genannte Parkassistenzsystem bekannt sind, über die drahtlose Verbindung zum Fahrzeug die Lagedaten des Fahrzeuges redundant erfasst werden. Basierend auf dieser redundanten Erfassung können die intern erfassten Lagedaten und damit der interne Sensor abgeglichen werden, um beispielsweise Fehler zu finden, den internen Sensor zu kalibrieren oder aber um beispielsweise im Rahmen einer Sensorfusion die Lagedaten des Fahrzeuges allgemein zu präzisieren. Auf diese Weise kann die Verwendung der externen Lagedaten erweitert werden.

In einer Weiterbildung des angegebenen Verfahrens ist der externe Sensor in einem Parkhaus, zur Ortung des Fahrzeuges angeordnet und kann so in einem stationäre Verifikations- und Überwachungseinrichtung eines Parkassistenzsystems, wie dem eingangs genannten Parkassistenzsystem verwendet werden. Dabei wird dann der externe Sensor als Teil eines Leitsystems für das Fahrzeug in dem Parkhaus verwendet, um das Fahrzeug in eine Parklücke in dem Parkhaus zu leiten.

Alternativ kann der externe Sensor auch in einer Parkanlage verwendet werden, die am Bandende eines Herstellers für Fahrzeuge die hergestellten Fahrzeuge zwischenlagert. Im Rahmen dieser Zwischenlagerung kann durch Anwenden des angegebenen Verfahrens in besonders günstiger Weise beim Abstellen eines neu hergestellten Fahrzeuges auf einem Parkplatz der Parkanlage der interne Sensor in-situ bei dieser Abstellung mit kalibriert oder eine bereits durchgeführte Bandebde-Kalibrierung kann automatisch mit überprüft werden.

In einer anderen Weiterbildung des angegebenen Verfahrens werden die internen Lagedaten mit der Filterung basierend auf den externen Lagedaten überprüft. Auf diese Weise können Fehler bei der Erfassung der Lage des Fahrzeuges und der Beschreibung durch die internen Lagedaten aufgedeckt werden, die beispielsweise durch Alterungseffekte und/oder durch Effekte, die durch Einbaupositionsänderungen hervorgerufen werden. Einbaupositionsänderungen können beispielsweise durch eine Veränderung der Sensorgeometrie bei Unfällen mit dem Fahrzeug oder dergleichen auftreten und werden im späteren Betrieb des Fahrzeuges in der Regel nicht mehr berücksichtigt. Gerade bei hochpräzisen ADAS genannten Fahrerassistenzsystemen, wie beispielsweise einem automatischen Einparkassistenten, sollten jedoch bereits kleinere Fehler vermieden werden, da sie die Leistungsfähigkeit von ADAS-Funktionen in Fahrzeugen enorm einschränken können.

In einer besonderen Weiterbildung umfasst das angegebene Verfahren den Schritt Kalibrieren eines die internen Lagedaten im Fahrzeug erfassenden Sensors basierend auf der Überprüfung. Auf diese Weise können die zuvor genannten Fehler automatisch korrigiert werden. Auf diese Weise kann viel zuverlässiger ein robuster Betrieb von ADAS-Funktionen in Fahrzeugen sichergestellt werden.

In einer noch anderen Weiterbildung des angegebenen Verfahrens sind die externen Lagedaten eingerichtet, eine absolute Position des Fahrzeuges zu beschreiben. Dabei können die die absolute Position beschreibenden Lagedaten an einen Empfänger eines GNSS-Signals genannten globalen Navigationssatellitensystem-Signals bereitgestellt werden. Dies kann beispielsweise beim Verlassen des zuvor genannten Parkhauses geschehen, in dem selbst in der Regel kein GNSS-Signal empfangbar ist. Durch die bereitgestellte absolute Position des Fahrzeuges kann der GNSS-Empfänger dabei nach dem Verlassen des Parkhauses beim einem erneuten Empfang eines GNSS-Signals schneller das Fahrzeug lokalisieren und Werte für die absolute Position des Fahrzeuges liefern.

Gemäß einem weiteren Aspekt der Erfindung ist eine Steuervorrichtung eingerichtet, eines der angegebenen Verfahren durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem anderen Aspekt der Erfindung umfasst ein Fahrzeug eine angegebene Steuervorrichtung.

Gemäß einem weiteren Aspekt der Erfindung wird die Aufgabe gelöst mittels eines Systems zum Ausführen eines Verfahrens nach einem der vorgenannten Ausführungsformen. Das System umfasst Mittel zum Erfassen eines Fahrzeugs. Diese Mittel sind fest installiert. Ferner werden die Mittel mit Informationen versorgt, die an das Fahrzeug gesendet werden. Ferner umfasst das System eine Recheneinheit zum Ermitteln und bereitstellen der zu sendenden Informationen. Des Weiteren umfasst das System eine in einem Fahrzeug anzubringende Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines Fahrzeuges in einem Parkhaus,
Fig. 2 eine Prinzipdarstellung des Fahrzeuges der Fig. 1,
Fig. 3 eine Prinzipdarstellung eines Fahrzeug-Ad-Hoc-Netzwerkes, an dem das Fahrzeug der Fig. 1 und 2 teilnehmen kann, und
Fig. 4 eine Prinzipdarstellung eines Fusionssensors in dem Fahrzeug der Fig. 1 und 2 zeigen.

In den Figuren werden gleiche technische Elemente mit gleichen Bezugszeichen versehen und nur einmal beschrieben.

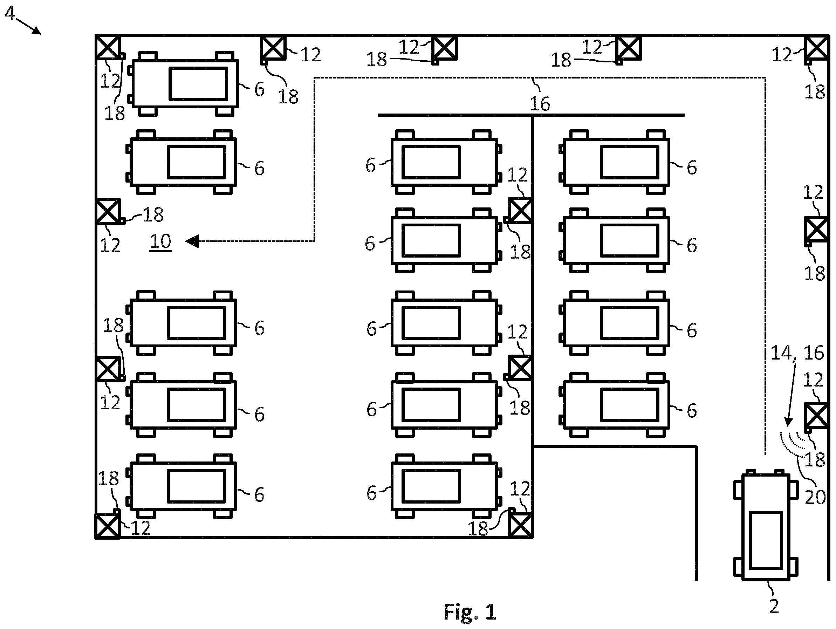

Es wird auf Fig. 1 Bezug genommen, in der in einer Prinzipdarstellung ein Fahrzeug 2 in einem Parkhaus 4 gezeigt ist.

Wie in Fig. 1 zu sehen, können in dem Parkhaus 4 eine Vielzahl anderer Fahrzeuge 6 parken. Um das Fahrzeug 2 in dem Parkhaus 4 zu parken, muss ein Weg 8 zu einer Parklücke 10 zwischen den bereits parkenden Fahrzeugen 6 gefunden werden. Auf diesem Weg 8 muss das Fahrzeug 2 dann zur Parklücke 10 bewegt und in die Parklücke 10 eingeparkt werden.

Im Rahmen der vorliegenden Ausführung ist in dem Parkhaus 4 ein Parkassistent mit einer Vielzahl von im Parkhaus 4 verteilten externen Lagesensoren 12 vorhanden. Die externen Lagesensoren 12 erfassen extern vom Fahrzeug 2 aus seine Lage und beschreiben sie in Lagedaten, die nachstehend deshalb externe Lagedaten 14 genannt werden. Ferner melden die Lagesensoren 12 die externen Lagedaten 14 und damit die Lage des Fahrzeuges 2 an eine nicht gezeigte übergeordnete Auswerteeinrichtung. Die Auswerteeinrichtung kennt alle freien Parklücken 10 im Parkhaus 4 und berechnet basierend auf der mit den externen Lagedaten 14 beschriebenen Lage des Fahrzeuges 2 und der Lage der Parklücke 10 den Weg 16 dorthin und gibt ihn als Führungsgröße dem Fahrzeug 2 vor.

Jeder Lagesensor 12 im Parkhaus 4 verfügt über eine Funkantenne 18, mit der der Parkassistent den Weg 16 als Führungsgröße und/oder die externen Lagedaten 14 des Fahrzeugs 2 als Istgröße in einem Funksignal 20 an das Fahrzeug 2 senden kann.

Basierend auf den dem vorgegebenen Weg 16 als Führungsgröße und den externen Lagedaten 14 als Istgröße kann das Fahrzeug 2 dann im Rahmen einer Funktion für HAF genanntes hochautomatisiertes Fahren geeignete Stelleingriffe am Fahrzeug 2 durchführen, das Fahrzeug 2 auf dem Weg 16 führen und in der Parklücke 10 einparken. Auf diese Weise ist für den gesamten Einparkvorgang kein Fahrer notwendig.

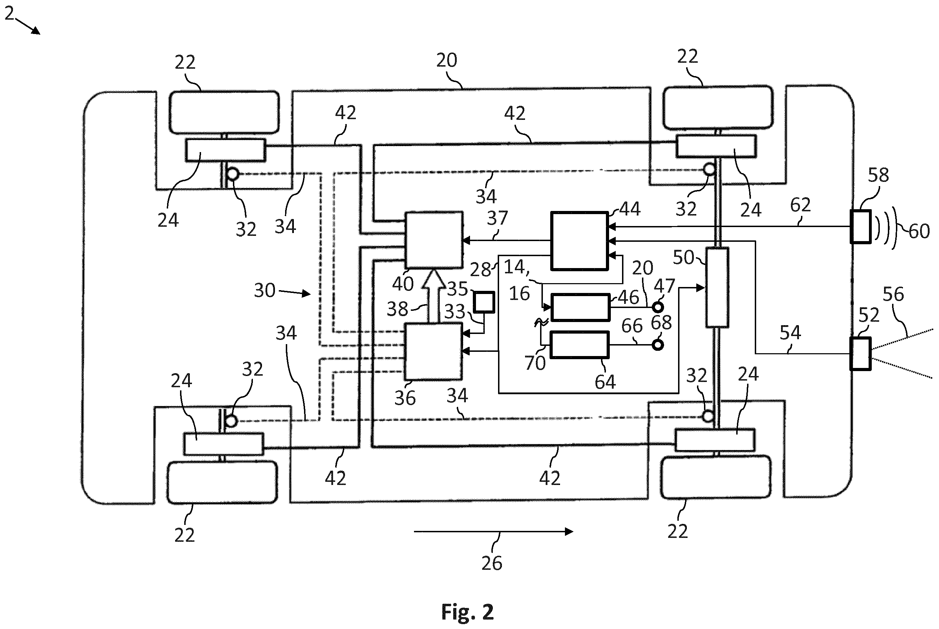

Die externen Lagedaten 14 stellt wie bereits ausgeführt aus Sicht des Fahrzeuges 2 eine externe Sensorinformation dar. Demgegenüber sind aus Sicht des Fahrzeuges 2 interne Sensorinformationen abzugrenzen, die mit Sensoren erfasst werden, die intern im Fahrzeug 2 vorhanden sind. Hierzu sollen nachstehend anhand von Fig. 2 einige Beispiele aufgezeigt werden.

Das Fahrzeug 2 umfasst ein Chassis 20 und vier Räder 22. Jedes Rad 22 kann über einen ortsfest am Chassis 20 befestigten Elektromotor 24 gegenüber dem Chassis 20 individuell gedreht werden, um das Fahrzeug 2 in einer Bewegungsrichtung 26 auf dem Weg 16 im Parkhaus 4 zu bewegen. Dabei kann ein Verlust der Bodenhaftung der Räder 22 des Fahrzeugs 2 und eine damit verbundene Abweichung des Fahrzeugs 2 von einer durch ein noch zu beschreibendes Lenksignal 28 vorgegebenen Trajektorie durch Untersteuern oder Übersteuern durch eine Fahrdynamikregelung 30 vermieden werden. Die Fahrdynamikregelung 30 fällt wie die oben genannte HAF-Funktion unter die sogenannten ADAC genannten Fahrerassistenzfunktionen.

In der vorliegenden Ausführung weist das Fahrzeug 4 für die Fahrdynamikregelung 30 Drehzahlsensoren 32 an den Rädern 22 auf, die je eine Drehzahl 34 der Räder 22 erfassen. Die Drehzahlen 34 stellen ein Beispiel für die zuvor genannten internen Sensorinformation dar und sind damit aus Sicht des Fahrzeuges 2 interne Sensordaten. Das Fahrzeug 2 weist ferner einen Fahrdynamiksensor 35 auf, der Fahrdynamikdaten 33 ausgibt, die ebenfalls interne Sensorinformationen darstellen und damit aus Sicht des Fahrzeuges 2 interne Sensordaten sind.

Basierend auf den erfassten Drehzahlen 34 und den Fahrdynamikdaten 33, kann ein Regler 36 in einer dem Fachmann bekannten Weise bestimmen, ob das Fahrzeug 2 auf der Fahrbahn rutscht oder sogar von der oben genannten vorgegebenen Trajektorie abweicht und entsprechend mit einem an sich bekannten Reglerausgangssignal 38 darauf reagieren. Das Reglerausgangssignal 38 kann dann von einer Stelleinrichtung 40 verwendet werden, um mittels Stellsignalen 42 Stellglieder, wie die Elektromotoren 24 anzusteuern, die auf das Rutschen und die Abweichung von der vorgegebenen Trajektorie in an sich bekannter Weise beispielsweise im Rahmen des Torque-Vectoring reagieren. Weitere Details und alternative Ausführungsmöglichkeiten der Fahrdynamikregelung 30 können der DE 10 2011 080 789 A1 entnommen werden.

Die HAF-Funktion ist in einer entsprechenden, mit dem Bezugszeichen 44 versehenen Recheneinrichtung implementiert, die nachstehend HAF-Funktion 44 genannt wird. Die HAF-Funktion 44 kann aus einem noch zu beschreibenden Funkempfänger 46 den Weg 16 zur Parklücke 10 als Führungsgröße und die externen Lagedaten 14 als Istgröße erhalten, der das entsprechende Funksignal 20 über eine Fahrzeugantenne 47 empfängt. Grundsätzlich führt die HAF-Funktion 44 basierend darauf einen Soll-/Istwertvergleich durch und greift mit dem Lenksignal 28 und einem Antriebssignal 48 in das Fahrzeug 2 ein, um das Fahrzeug 2 auf dem Weg 16 zur Parklücke zu bewegen. Während mit dem Antriebssignal 48 über die Stelleinrichtung 40 die Elektromotoren 24 zum Antrieb des Fahrzeuges 2 betätigt werden, wird das Fahrzeug 2 mit dem Lenksignal 28 über eine Lenkung 50 gelenkt. Auf eine zusätzlich notwendige Bremseinrichtung zum Abbremsen des Fahrzeuges 2, die ebenfalls von der HAF-Funktion 44 angesteuert werden kann, wird nachstehend der Kürze halber nicht weiter eingegangen.

Um auf dem Weg 16 auf eventuelle Hindernisse wie Fußgänger oder dergleichen reagieren zu können, umfasst das Fahrzeug 2 in Bewegungsrichtung 26 vorn am Fahrzeug 2 gesehen eine Kamera 52, die ein Bild 54 in einem Blickwinkel 56 vor dem Fahrzeug 2 erfasst und ein Radarsensor 58, der mit Radarstrahlen 60 einen Abstand 62 zu einem eventuellen Hindernis vor dem Fahrzeug bestimmt. In dem Bild 54 kann dann die HAF-Funktion 44 zusammen mit dem Abstand 62 eventuelle Hindernisse vor dem Fahrzeug 2 identifizieren und mit dem Lenksignal 28 und der zuvor genannten Bremseinrichtung gegebenenfalls ausweichen. Sowohl das Bild 54 als auch der Abstand 62 stellen interne Sensorinformationen und damit aus Sicht des Fahrzeuges 2 interne Sensordaten dar.

Weitere Details zur HAF-Funktion 44 können beispielsweise der DE 10 2012 112 442 A1 entnommen werden.

Schließlich kann in dem Fahrzeug 2 zum Empfang aus einem GNSS genannten globalen Satellitennavigationssystem ferner ein GNSS-Empfänger 64 für ein entsprechendes GNSS-Signal 66 über eine GNSS-Antenne 68 vorhanden sein. Aus diesem GNSS-Signal 66 bestimmt der GNSS-Empfänger 64 eine globale Position 70 des Fahrzeuges 2. Auch diese globale Position 70 stellt eine interne Sensorinformation und damit aus Sicht des Fahrzeuges 2 interne Sensordaten dar. In dem Parkhaus 4 ist jedoch der Empfang eines GNSS-Signals 66 nicht möglich, weshalb auch die globale Position 70 nicht bestimmbar ist. Dies ist in Fig. 2 durch eine aufgetrennte Linie dargestellt.

Nachdem der Unterschied zwischen internen Sensordaten und externen Sensordaten erläutert wurde, soll kurz auf die Übertragung der externen Sensordaten, also der externen Lagedaten 14 aus dem Parkhaus 4 an das Fahrzeug 2 in dem Funksignal 20 eingegangen werden.

Das Funksignal 20 kann prinzipiell über eine beliebige Netzwerkstruktur übertragen werden. Nachstehend soll beispielshaft als Netzwerkstruktur ein sogenanntes Fahrzeug-Ad-Hoc-Netzwerk als Beispiel herangezogen werden, für das bereits einige länderspezifische Kommunikationsprotokolle beispielsweise im Rahmen der ETSI TC ITS bei ETSI in Europa und im Rahmen der IEEE 1609 bei IEEE sowie bei SAE in den Vereinigten Staaten von Amerika vorgeschlagen wurden.

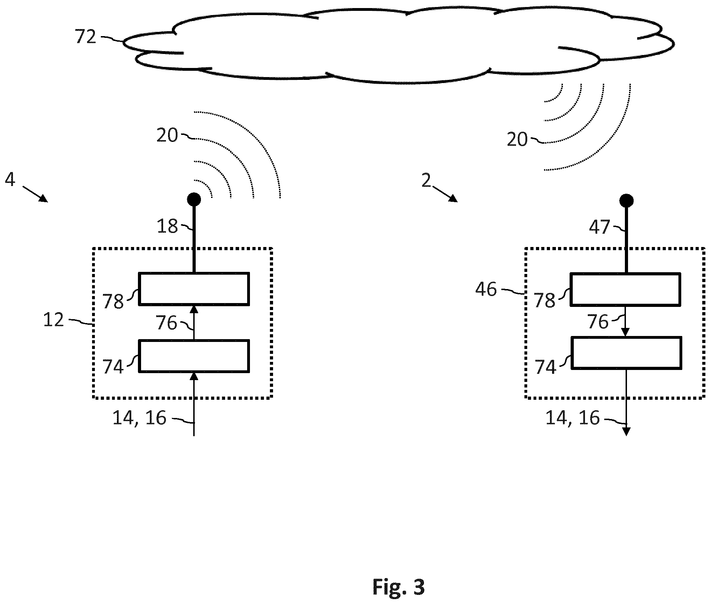

Ein derartiges Fahrzeug-Ad-Hoc-Netzwerk ist auch unter dem Namen Car2X-Netzwerk bekannt und soll nachstehend anhand von Fig. 3 näher erläutert werden, in dem es in Form einer die Funksignale 20 tragenden Wolke dargestellt und mit dem Bezugszeichen 72 versehen ist.

Zum Versenden des Funksignals 20 umfasst jeder Lagesensor 12 im Parkhaus 4 einen Sender mit zwei Netzwerkschichten. Eine Routingschicht 74 erzeugt aus den zu versendenden Daten, das heißt der externen Lage 14 oder dem Weg 16, Datenpakete 76 mit einer vorbestimmen Struktur und moduliert sie in einer physikalischen Schicht 78 auf das Funksignal 20 auf. Die Struktur der Datenpakete 76 ist dabei in der oben genannten Spezifikation bestimmt, wobei zur Erzeugung der Datenpakete 76 gegebenenfalls weitere Informationen, wie beispielsweise Zeitstempel benötigt werden.

Um die HAF-Funktion 44 in dem Parkhaus 4 anwenden zu können, müssen die durch die externen Lagesensoren 12 des Parkhauses 4 erfassten Lagedaten 14 die externe Lage des Fahrzeuges 2 hochpräzise beschreiben. Entsprechend hochqualitativ sind demnach auch die externen Lagedaten 14 hinsichtlich der Toleranz der externen Lage des Fahrzeuges 2.

In der vorliegenden Ausführung soll diese hochqualitative externe Lage 14 dazu verwendet werden, interne Sensoren in dem Fahrzeug 2 zu überprüfen und/oder zu kalibrieren. An dieser Stelle sei darauf hingewiesen, dass die die hochqualitative externe Lage 14 auch auf einem Parkplatz am Bandende eines Fahrzeugherstellers dazu verwendet werden könnte, interne Sensoren in dem Fahrzeug 2 zu überprüfen und/oder zu kalibrieren. Das Parkhaus 4 ist daher nur einer von vielen möglichen Anwendungsfällen. Dies soll nachstehend beispielhaft anhand des Fahrdynamiksensors 35 erläutert werden. Prinzipiell lässt sich das nachstehende Verfahren aber auf jeden beliebigen internen Sensor im Fahrzeug 2 anwenden.

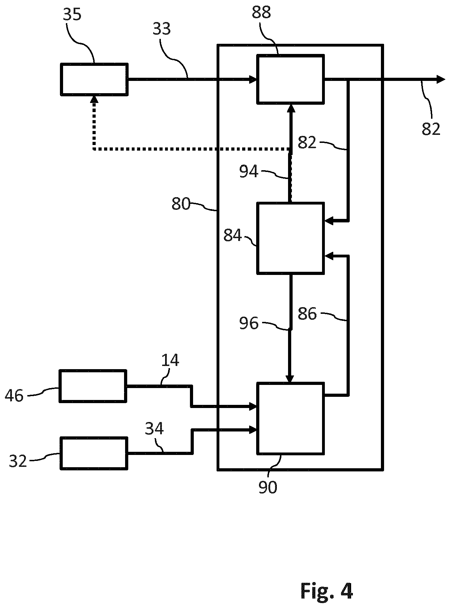

Zur Anwendung kommt dabei ein in Fig. 4 gezeigter Fusionssensor 80. Grundgedanke des Fusionssensors 80 ist es, die externen Lagedaten 14 aus dem Funkempfänger 46, den internen Sensorinformationen, wie den Fahrdynamikdaten 33 aus dem Fahrdynamiksensor 35 und den Raddrehzahlen 34 aus den Raddrehzahlsensoren 32 einander gegenüberzustellen und einen Signal/Rauschbandabstand in wenigstens einem der Sensorsignale zu bestimmen. Basierend auf dem Signal/Rauschbandabstand können dann die internen Sensoren des Fahrzeuges 2 überprüft und gegebenenfalls kalibriert werden.

Der Fusionssensor 80 kann ferner aus den empfangenen Sensorinformationen präzisierte Lagedaten 82 des Fahrzeuges 2 in dem Parkhaus 4 ausgeben. Diese präzisierten Lagedaten 82 können die Position des Fahrzeuges 2 in dem Parkhaus 2 als auch seine Fahrdynamik in dem Parkhaus 2 beschreiben. Zur Bestimmung der präzisierten Lagedaten 82 werden externen Lagedaten 14 aus dem Funkempfänger 46 den Fahrdynamikdaten 33 aus dem Fahrdynamiksensor 14 in einem Filter 84 gegenübergestellt, wodurch der Signal/Rauschbandabstand in den externen Lagedaten 14 aus dem Funkempfänger 46 oder den Fahrdynamikdaten 33 aus dem Fahrdynamiksensor 35 bestimmt wird. Dazu kann das Filter 84 zwar beliebig ausgebildet, ein Kalman-Filter löst diese Aufgabe am wirkungsvollsten mit einem vergleichsweise geringen Rechenressourcenanspruch. Daher soll das Filter 84 nachstehend vorzugsweise ein Kalman-Filter 84 sein.

In das Kalman-Filter 84 gehen die präzisierten Lagedaten 82 des Fahrzeuges 2 und Vergleichslagedaten 86 des Fahrzeuges 2 ein. Die präzisierten Lagedaten 82 werden in der vorliegenden Ausführung in einem beispielsweise aus der DE 10 2006 029 148 A1 bekannten Strapdown-Algorithmus 88 aus den Fahrdynamikdaten 33 generiert. Demgegenüber werden die Vergleichslagedaten 86 aus einem Modell 90 des Fahrzeuges 2 gewonnen, das zunächst einmal aus dem Funkempfänger 46 mit den externen Lagedaten 14 gespeist wird. Aus den externen Lagedaten 14 werden dann in dem Modell 90 die Vergleichslagedaten 86 bestimmt, die die gleichen Informationen enthalten, wie die präzisierten Lagedaten 82. Die präzisierten Lagedaten 82 und die Vergleichslagedaten 86 unterscheiden sich lediglich in ihren Werten.

Das Kalman-Filter 84 berechnet basierend auf den präzisierten Lagedaten 82 und den Vergleichslagedaten 86 einen Fehlerhaushalt 92 für die präzisierten Lagedaten 82 und einen Fehlerhaushalt 94 für die Vergleichslagedaten 86. Unter einem Fehlerhaushalt soll nachstehend ein Gesamtfehler in einem Signal verstanden werden, der sich aus verschiedenen Einzelfehlern bei der Erfassung und Übertragung des Signals zusammensetzt. In den Fehlerhaushalt eines Signals können die Abweichung vom Erwartungswert des Signals und die Varianz des Signals eingehen.

Der Fehlerhaushalt 94 der präzisierten Lagedaten 82 und der Fehlerhaushalt 96 der Vergleichslagedaten 86 können dann entsprechend im Strapdown-Algorithmus 88 und im Modell 90 zur Korrektur der präzisierten Lagedaten 82 beziehungsweise der Vergleichslagedaten 86 verwendet werden. Das heißt, dass die präzisierten Lagedaten 82 und die Vergleichslagedaten 86 iterativ um ihre Fehler bereinigt werden.

Sobald das Fahrzeug 2 das Parkhaus 4 verlässt, können die externen Lagedaten 14 durch die globale Position 70 aus dem GNSS-Empfänger 64 ersetzt werden, wodurch die präzisierten Lagedaten 82 sofort weitergeschrieben werden können.

Im Rahmen der vorliegenden Ausführung kann der Fehlerhaushalt 94 der präzisierten Lagedaten 82 zur Einstellung des Fahrdynamiksensors 35 verwendet. Das ist in Fig. 4 durch eine gepunktete Linie angedeutet. Durch die Kalibrierung des Fahrdynamiksensors 35 basierend auf dem Fehlerhaushalt 94 wird die hohe Qualität der externen Lagedaten 14 genutzt, um die Qualität eines internen Sensors, hier des Fahrdynamiksensors 35, und damit des entsprechenden Sensorsignals, hier der Fahrdynamikdaten 33, im Fahrzeug 2 zu verbessern.

In der gleichen Weise könnten auch die Raddrehzahlsensoren 32 kalibriert werden, von denen in Fig. 4 der Übersichtlichkeit halber nur einer dargestellt ist.

## Patentansprüche

1. Verfahren zum Kalibrieren eines internen Sensors (35) in einem Fahrzeug (2) mit einem externen Sensor (12), der in einem Parkhaus (4), zur Ortung des Fahrzeuges (2) angeordnet ist und eingerichtet ist, von einer Lage des Fahrzeugs (2) abhängige externe Lagedaten (14) zu erfassen, umfassend:
- Erfassen der externen Lagedaten (14) mit dem externen Sensor (12),
- Senden der externen Lagedaten (14) an das Fahrzeug (2), und
- Kalibrieren von mit dem internen Sensor (35) erfassten und von der Lage des Fahrzeugs (2) abhängigen internen Lagedaten (33) mittels eines Filters (84), basierend auf den externen Lagedaten (14), **dadurch gekennzeichnet, dass** der externe Sensor (12) Teil eines Leitsystems für das Fahrzeug (2) in dem Parkhaus (4) ist, um das Fahrzeug (2) in eine Parklücke (10) in dem Parkhaus (4) zu leiten.

2. Verfahren nach einem der vorstehenden Ansprüche, wobei die internen Lagedaten (33) mit der Filterung (84) basierend auf den externen Lagedaten (14) überprüft (94) werden.

3. Verfahren nach Anspruch 2, umfassend:
- Kalibrieren eines die internen Lagedaten (33) im Fahrzeug erfassenden Sensors (35) basierend auf der Überprüfung (94).

4. Verfahren nach einem der vorstehenden Ansprüche, wobei die externen Lagedaten (14) eingerichtet sind, eine absolute Position des Fahrzeuges (2) zu beschreiben.

5. Verfahren nach Anspruch 4, umfassend:
- Bereitstellen der die absolute Position beschreibenden Lagedaten (14) an einen Empfänger (64) eines GNSS-Signals (66) genannten globalen Navigationssatellitensystem-Signals.

6. Steuervorrichtung zur Durchführung eines Verfahrens nach einem der vorstehenden Ansprüche.

7. Fahrzeug (2), umfassend eine Steuervorrichtung nach Anspruch 6.

8. System zum Ausführen eines Verfahrens nach einem der Ansprüche 1 bis 5.

## Claims

1. Method for calibrating an internal sensor (35) in a vehicle (2) having an external sensor (12) which is arranged in multi storage carpark (4) for determining the location of the vehicle (2) and is configured to sense external position data (14) which are dependent on a position of the vehicle (2), comprising:
- sensing the external position data (14) with the external sensor (12),
- transmitting the external position data (14) to the vehicle (2) and
- calibrating internal position data (33) which are sensed with the internal sensor (35) and are dependent on the position of the vehicle (2), by means of a filter (84), on the basis of the external position data (14), **characterized in that** the external sensor (12) is part of a guiding system for the vehicle (2) in the multi storage car park (4) in order to guide the vehicle (2) into a parking space (10) in the multi storage car park (4).

2. Method according to one of the preceding claims, wherein the internal position data (33) are checked (94) with the filtering (84) on the basis of the external position data (14).

3. Method according to Claim 2, comprising:
- calibrating a sensor (35) which senses the internal position data (33) in the vehicle, on the basis of the checking (94).

4. Method according to one of the preceding claims, wherein the external position data (14) are configured to describe an absolute position of the vehicle (2).

5. Method according to Claim 4, comprising:
- making available the position data (14), describing the absolute position, to a receiver (64) of a GNSS signal (66), a so-called global navigation satellite system signal.

6. Control device for carrying out a method according to one of the preceding claims.

7. Vehicle (2) comprising a control device according to Claim 6.

8. System for carrying out a method according to one of Claims 1 to 5.

## Revendications

1. Procédé d'étalonnage d'un capteur interne (35) dans un véhicule (2) équipé d'un capteur externe (12) disposé dans un garage de stationnement (4) pour localiser le véhicule (2) et conçu pour détecter des données de position externes (14) dépendantes de la position du véhicule (2), comprenant :
- la détection des données de position externes (14) avec le capteur externe (12),
- l'envoi des données de position externes (14) au véhicule (2), et
- l'étalonnage de données de position internes (33) détectées avec le capteur interne (35) et dépendantes de la position du véhicule (2) au moyen d'un filtre (84), sur la base des données de position externes (14), **caractérisé en ce que** le capteur externe (12) fait partie d'un système de guidage destiné au véhicule (2) dans le garage de stationnement (4) pour guider le véhicule (2) dans un emplacement de stationnement (10) dans le garage de stationnement (4).

2. Procédé selon l'une des revendications précédentes, dans lequel les données de position internes (33) sont vérifiées (94) par le filtrage (84) sur la base des données de position externes (14).

3. Procédé selon la revendication 2, comprenant :
- l'étalonnage d'un capteur (35) détectant les données de position internes (33) dans le véhicule sur la base de la vérification (94).

4. Procédé selon l'une des revendications précédentes, dans lequel les données de position externes (14) sont conçues pour décrire une position absolue du véhicule (2).

5. Procédé selon la revendication 4, comprenant :
- la fourniture des données de position (14) décrivant la position absolue à un récepteur (64) d'un signal de système positionnement par satellite mondial, dit signal GNSS (66).

6. Dispositif de commande destiné à mettre en œuvre un procédé selon l'une des revendications précédentes.

7. Véhicule (2) comprenant un dispositif de commande selon la revendication 6.

8. Système destiné à mettre en œuvre un procédé selon l'une des revendications 1 à 5.
